# EUROPEAN PATENT SPECIFICATION

(11) **EP 2 143 971 B1**
(45) Date of publication and mention of the grant of the patent: **16.11.2011**
(21) Application number: 09164745.3
(22) Date of filing: 07.07.2009
(51) Int. Cl.: F16F 9/53

(54) **Piston valve assembly and damper including the same**
Kolbenventilanordnung und Dämpfer damit
Assemblage de vanne à piston et amortissement l'incluant

(30) Priority: 11.07.2008 KR 20080067419
(43) Date of publication of application: 13.01.2010
(73) Proprietor: S & T Daewoo Co., Ltd., Gijang-gun, Busan 619-873 (KR)
(72) Inventor: Lee, Dong-Rak, Busan, 614-010 (KR); Huh, Chang-Do, Busan, 608-090 (KR); Jin, Min-Ho, Busan, 619-873 (KR)
(74) Representative: Staudt, Hans-Peter

(56) References cited:
- EP-A1- 1 437 526
- WO-A1-00/53950
- GB-A- 2 346 192
- KR-A- 20060 121 586
- US-A1- 2002 130 000
- US-A1- 2004 154 524
- US-B1- 6 390 252

## Description

This application claims the benefit of Korean Patent Application No. 10-2008-0067419, filed in Korea on July 11, 2008.

### BACKGROUND OF THE INVENTION

### Field of the Invention

The present invention relates to a piston valve assembly, and more particularly, to a piston valve assembly and a continuous damping control damper including the piston valve assembly.

### Discussion of the Related Art

In general, a suspension is provided between a car body and a wheel so as to improve driving comfort. The suspension includes a chassis spring for absorbing vibration and shock from a road surface, and a damper for damping free vibration of the chassis spring. The damper functions to absorb the free vibration of the chassis spring by converting vertical kinetic energy into heat energy, thereby rapidly damping the free vibration of the chassis spring.

Recently, in a high-class vehicle, an active controlled suspension system which detects a body status of the vehicle and then feeds back the detecting results so as to electronically control a damping force of the damper has been widely used.

As one of various methods of electronically controlling the damping force of the damper, a method in which a path for transmitting fluid is formed in a piston valve assembly reciprocating in a cylinder and the movement of fluid through the path is adjusted may be used. The method of adjusting the movement of fluid through the path is classified into a way of adjusting a sectional area of the path using a spring and a way that fills electrorheological fluid or magneto-rheological (MR) fluid in the cylinder and then adjusts a fluidic resistance of the fluid using an electric or magnetic property of the fluid.

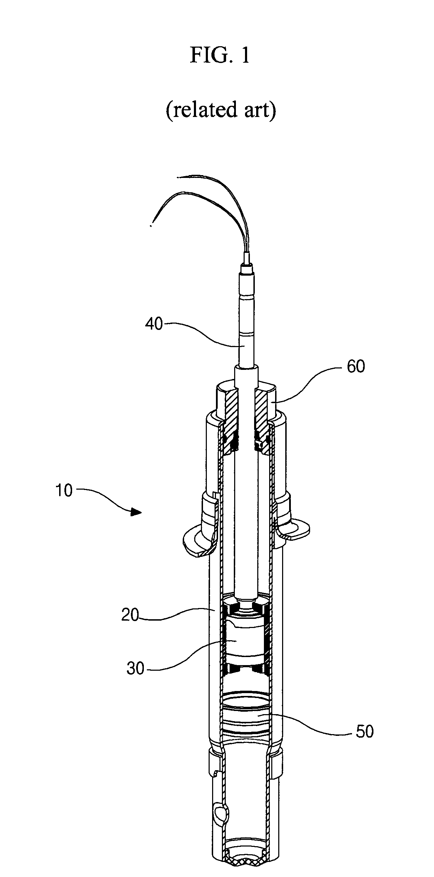

FIG. 1 is a partially cutaway perspective view showing a damper according to the related art.

In FIG. 1, a damper 10 using a magneto-rheological (MR) fluid includes a cylinder 20 having a longitudinal hollow portion therein, a piston rod 40 which is inserted through an upper portion of the cylinder 20, a piston valve assembly 30 which is connected to a lower end portion of the piston rod 40 so as to reciprocate in the cylinder 20. In addition, a floating piston 50 is disposed under the piston valve assembly 30 to compensate a volume change due to an up/down movement of the piston rod 40, and a space under the floating piston 50 is filled with a nitrogen gas of high pressure. A rod guide 60 is coupled to an upper end portion of the cylinder 20 so as to air-tightly close the cylinder 20 and also guide the up/down movement of the piston rod 40.

An inner space of the cylinder 20 includes a lower compression room and an upper rebound room with respect to the piston valve assembly 30. Each of the compression and rebound rooms is filled with the MR fluid. The MR fluid contains metal particles of a radius within a range of about 3 µm to about 10 µm. When a magnetic field is applied to the MR fluid, an apparent viscosity of the MR fluid varies due to the metal particles. Accordingly, a damping force such as a compression strength and a rebound strength of the damper 10 is controlled according to variation of the apparent viscosity of the MR fluid by applying a magnetic field to the MR fluid passing the compression and rebound rooms through the piston valve assembly 30.

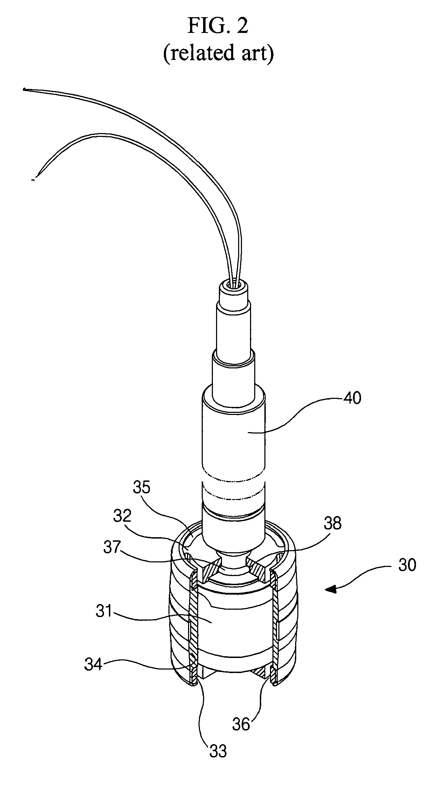

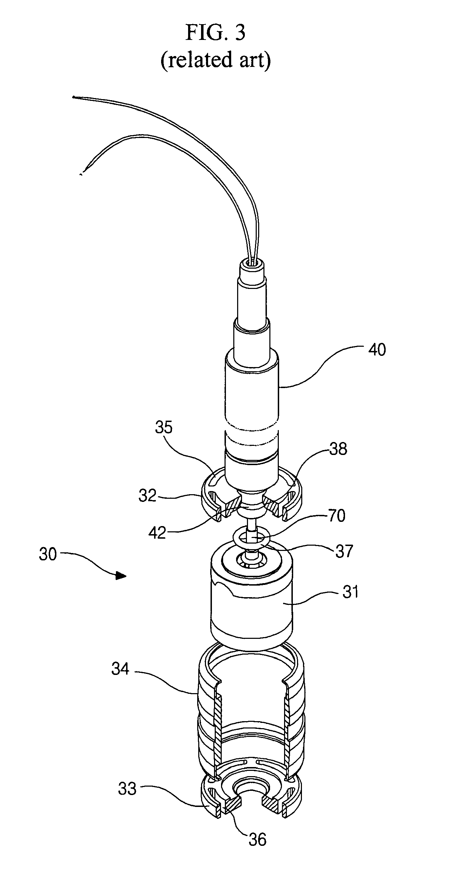

FIGs. 2 and 3 are a partially cutaway perspective view and an exploded perspective view, respectively, showing a piston valve assembly for a damper according to the related art.

In FIGs. 2 and 3, the piston valve assembly 30 includes a core assembly 31 having a solenoid coil and fixed at a lower portion of the piston rod 40, an upper plate 32 at an upper portion of the core assembly 31, a lower plate 33 at a lower portion of the core assembly 31 and a flux ring 34 surrounding the core assembly 31. The flux ring 34 provides a path for a magnetic field generated by the solenoid coil of the core assembly 31, and the upper and lower plates 32 and 33 shield the compression and rebound rooms from the magnetic field. In addition, the flux ring 34 surrounds an upper edge portion of the upper plate 32 to seal a gap between the upper plate 32 and the core assembly 31 and surrounds a lower edge portion of the lower plate 33 to seal a gap between the lower plate 33 and the core assembly 31. Further, a path for the MR fluid is formed between the flux ring 34 and the core assembly 31. The upper and lower plates 32 and 33 include upper and lower through holes 35 and 36, respectively, connected to the path for the MR fluid.

The piston rod 40 includes a connecting groove 42 at an outer surface thereof for coupling a lower portion of the piston rod 40 with the piston valve assembly 30, and a key 37 having a ring shape of a circle in a cross-sectional view is combined with the connecting groove 42. Accordingly, the upper plate 32 is coupled with the piston rod 40 by combining the key 37 with the piston rod 40 between the upper plate 32 and the core assembly 31, and the piston valve assembly 30 and the piston rod 40 are coupled with each other by combining the core assembly 31, the upper plate 32 and the lower plate 33 using the flux ring 34. A connecting cable 70 in the piston rod 40 extends beyond the lower portion of the piston rod 40 to be connected to the solenoid coil of the core assembly 31.

The damping force of the damper 10 including the piston valve assembly 30 is controlled by changing a current applied to the solenoid coil of the piston valve assembly 30 according to the relative distance between the car body and the car axis.

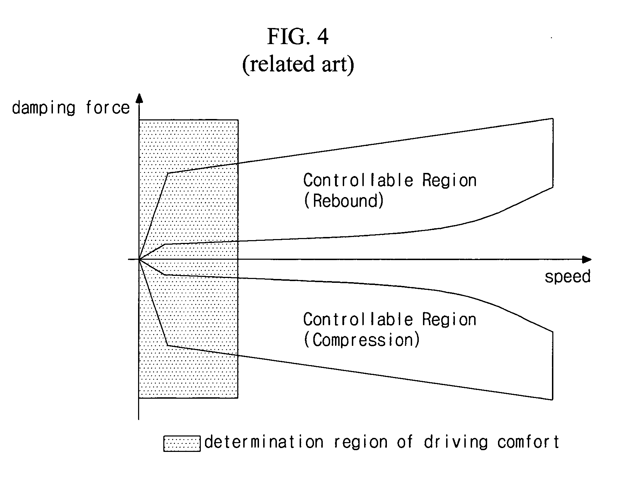

FIG. 4 is a graph showing characteristics of damping force of a damper including a piston valve assembly according to the related art.

In FIG. 4, the damping force rapidly increases in a relatively low speed section and the driving comfort is deteriorated due to the relatively high damping force. Accordingly, it is required to change the damping force according to the speed of the car to improve the driving comfort. In addition, the controllable region of the damping force is reduced in a relatively high speed section and it is hard to control the damping force of the damper 10 precisely according to various circumstances due to the narrow controllable region.

To solve the above-mentioned problems, a damper including a core of new structure has been suggested.

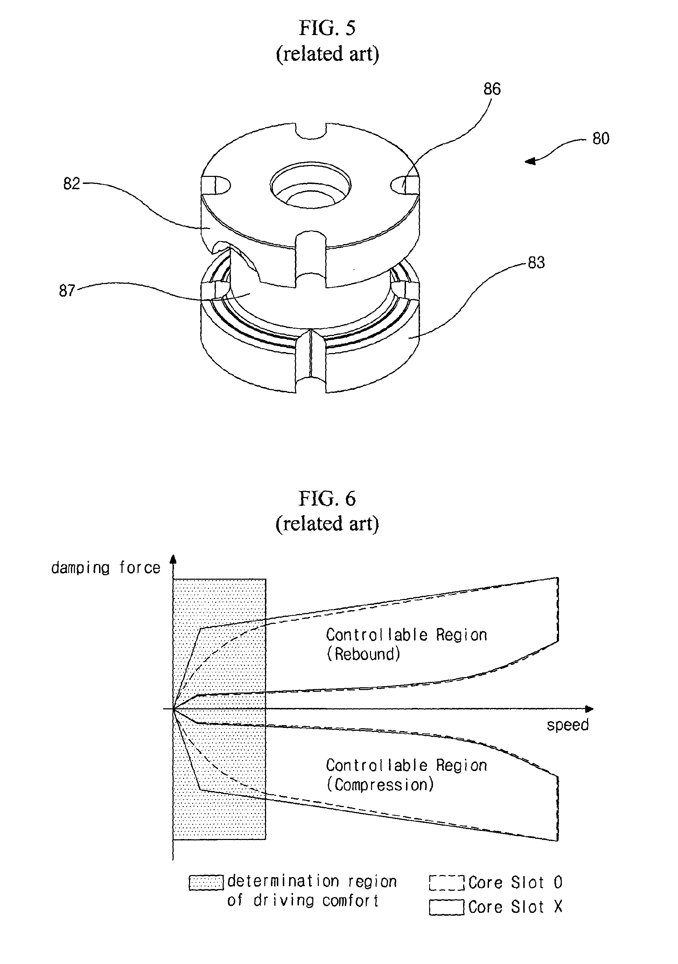

FIG. 5 is a perspective view showing a core of a core assembly for a damper according to the related art.

In FIG. 5, a core 80 includes a winding portion 87 where a solenoid coil is wound and upper and lower protrusions 82 and 83 connected to upper and lower portions, respectively, of the winding portion 87. Each of the upper and lower protrusions 82 and 83 has a plurality of slots 86. Since the magnetic field generated by a current is reduced in a region adjacent to the plurality of slots 86, the damping force due to the MR fluid is also reduced as compared with a core without the plurality of slots.

FIG. 6 is a graph showing characteristics of damping force of two dampers with slots and without slots according to the related art.

In FIG. 6, the damping force and the increase rate of the damping force of the damper with core slots are smaller than those of the damper without core slots in a relatively low speed section. As a result, driving comfort is improved in a relatively low speed section due to the reduced damping force. In a relatively high speed section, however, the controllable region of the damping force is reduced even when the damper includes the core slots. Accordingly, it is hard to control the damping force of the damper precisely in a relatively high speed section even when the damper includes the core slots.

Referring again to FIGs. 2 and 3, since the piston valve assembly 30 uses the key of a ring shape, the upper plate 32 where the piston rod 40 is inserted includes a concave groove 38 at an inner lower surface thereof. When the piston rod 40 moves upward for rebound, the rebound force of the piston rod 40 is concentrated on the key 37 and the concave groove 38 of the upper plate 32. As a result, the key 37 and the concave groove 38 may be deformed due to concentration of the rebound force after a long term usage, thereby reducing reliability of coupling. For example, when the key 37 and the concave groove 38 are spaced apart from each other due to abrasion, the control in damping force of the damper 10 may be unstabilized and the MR fluid may be leaked through a gap between the connecting cable 70 and the piston rod 40. In addition, the piston rod 40 may be departed from the piston valve assembly 30, e.g., the upper plate 32 due to break of the key 37 or the concave groove 38.
KR 2006 0121586 A discloses a piston valve assembly for a damper according to the preamble of claim 1.
GB 2 346 192 A discloses a damper according to the preamble of claim 6.

### SUMMARY OF THE INVENTION

Accordingly, the present invention is directed to a piston valve assembly and a continuous damping control damper including the piston valve assembly that substantially obviate one or more of problems due to limitations and disadvantages of the related art.

It is an object of the present invention to provide a piston valve assembly and a continuous damping control damper where a damping force is precisely controlled.

It is another object of the present invention to provide a piston valve assembly and a continuous damping control damper where a driving comfort is improved in a relatively low speed section due to reduction in damping force and a damping force is precisely controlled in a relatively high speed section due to enlargement in controllable region.

It is yet another object of the present invention to provide a piston valve assembly and a continuous damping control damper where a damping force is stably controlled by improving reliability of coupling of a piston rod and a piston valve assembly.

Additional features and advantages of the invention will be set forth in the description which follows, and in part will be apparent from the description, or may be teamed by practice of the invention. These and other advantages of the invention will be realized and attained by the structure particularly pointed out in the written description and claims hereof as well as the appended drawings.

To achieve these and other advantages and in accordance with the purpose of the present invention, as embodied and broadly described, a piston valve assembly for a damper according to claim 1 is provided.

In another aspect, a damper according to claim 6 is provided.

It is to be understood that both the foregoing general description and the following detailed description are exemplary and explanatory and are intended to provide further explanation of the invention as claimed.

### BRIEF DESCRIPTION OF THE DRAWING

The accompanying drawings, which are included to provide a further understanding of the invention and are incorporated in and constitute a part of this specification, illustrate embodiments of the invention and together with the description serve to explain the principles of the invention.

In the drawings:

FIG. 1 is a partially cutaway perspective view showing a damper according to the related art;

FIGs. 2 and 3 are a partially cutaway perspective view and an exploded perspective view, respectively, showing a piston valve assembly for a damper according to the related art;

FIG. 4 is a graph showing characteristics of damping force of a damper including a piston valve assembly according to the related art;

FIG. 5 is a perspective view showing a core of a core assembly for a damper according to the related art;

FIG. 6 is a graph showing characteristics of damping force of two dampers with slots and without slots according to the related art;

FIGs. 7 and 8 are a partially cutaway perspective view and an exploded perspective view, respectively, showing a piston valve assembly according to an embodiment of the present invention;

FIG. 9 is a plan view showing a piston valve assembly according to an embodiment of the present invention;

FIG. 10 is a cross-sectional view showing movement of an MR fluid in a cylinder of a damper according to an embodiment of the present invention;

FIG. 11 is a graph showing characteristics of a damping force of a damper with a plurality of slots on a flux ring according to an embodiment of the present invention;

FIG. 12 is a perspective view showing a stopper of a damper according to an embodiment of the present invention; and

FIG. 13 is a cross-sectional view showing a piston valve assembly of a damper according to an embodiment of the present invention.

### DETAILED DESCRIPTION OF THE ILLUSTRATED EMBODIMENTS

Reference will now be made in detail to the illustrated embodiment of the present invention, which is illustrated in the accompanying drawings.

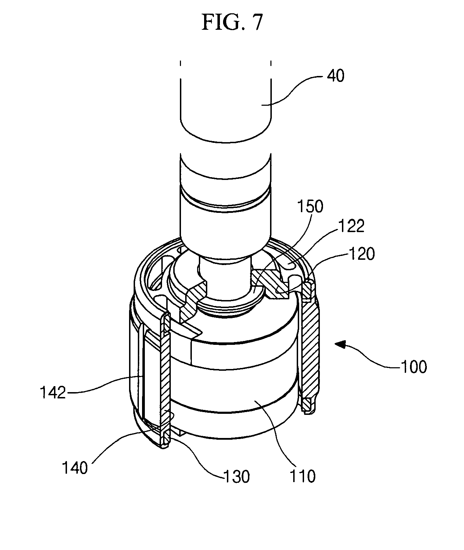

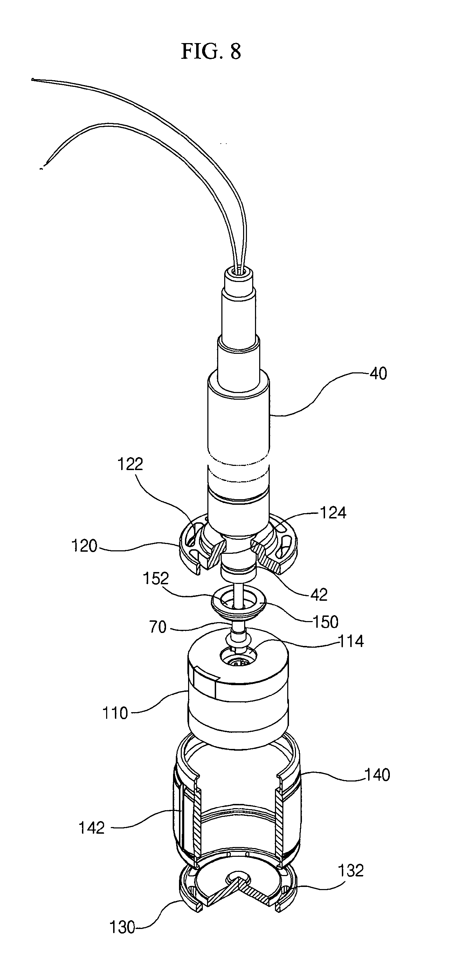

FIGs. 7 and 8 are a partially cutaway perspective view and an exploded perspective view, respectively, showing a piston valve assembly according to an embodiment of the present invention.

In FIGs. 7 and 8, a piston valve assembly 100 includes a core assembly 110, an upper plate 120, a lower plate 130 and a flux ring 140. The core assembly 110 is fixed to a lower portion of a piston rod 40 and includes a solenoid coil (not shown) therein. The upper and lower plates 120 and 130 are disposed at upper and lower portions, respectively, of the core assembly 110. The flux ring 140 surrounds and combines the core assembly 110, the upper plate 120 and the lower plate 130. The core assembly 110 includes a rod connecting groove 114 on a top surface thereof, and a lower portion of the piston rod 40 and a connecting cable 70 are inserted into the rod connecting groove 114. The upper and lower plates 120 and 130 include upper and lower through holes 122 and 132, respectively, for a magneto-rheological (MR) fluid. In addition, a stopper 150 fixed to the piston rod 40 is disposed between the upper plate 120 and the core assembly 110.

The flux ring 140 includes a plurality of slots 142 on an outer surface thereof. The plurality of slots 142 are parallel to a movement direction of the piston valve assembly 100 in the cylinder.

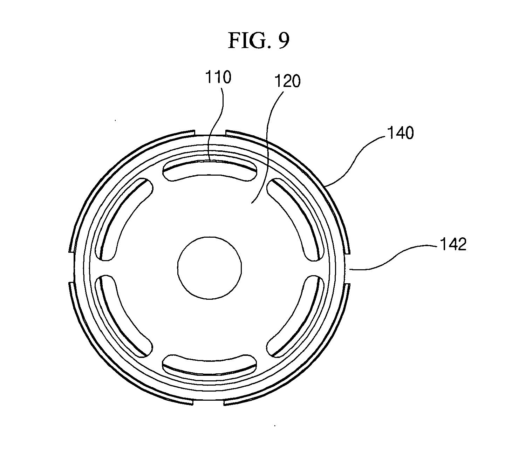

FIG. 9 is a plan view showing a piston valve assembly according to an embodiment of the present invention.

In FIG. 9, the plurality of slots 142 is formed on the outer surface of the flux ring 140 for the piston valve assembly 100. For example, four slots may be formed on the outer surface of the flux ring 140 symmetrically with respect to a center of the flux ring 140. The number of the plurality of slots 142 and the width, the depth, the size and the shape of each slot 142 may be determined according to required characteristics of the damping force. For example, the plurality of slots may be symmetrically formed with respect to a center of the core assembly 110. In addition, each slot 142 may have one of a triangular shape, a circular arc shape and a rectangular shape.

When the flux ring 140 includes the plurality of slots 142, the MR fluid flows through two paths. For example, the MR fluid may flow through a first path (an inner path) between the flux ring 140 and the core assembly 110 and through a second path (an outer path) between the flux ring 140 and the cylinder 20. As a result, the piston valve assembly 100 of FIG. 7 has the first and second paths for the MR fluid, while the piston valve assembly 30 of FIG. 1 has the first path for the MR fluid which connects the rebound and compression rooms. Since the total cross-sectional area of the paths for the MR fluid of the piston valve assembly 100 increases as compared with that of the piston valve assembly 30, the damping force is reduced in a relatively low speed section.

The magnetic field generated by the solenoid coil in the core assembly 110 is disposed along the flux ring 140. Since the upper and lower plates 120 and 130 shield the magnetic field, an intensity of the magnetic field outside the flux ring 140 is smaller than an intensity of the magnetic field inside the flux ring 140. Accordingly, the MR fluid flowing through the second path of the plurality of slots 142 is less influenced by the magnetic field as compared with the MR fluid flowing through the first path. Further, since the direction of the magnetic field is identical to the movement direction of the MR fluid, metal particles of the MR fluid flowing through the second path of the plurality of slots 142 are aligned along the movement direction of the MR fluid. As a result, the movement of the MR fluid is not disturbed by the metal particles in the MR fluid flowing through the second path of the plurality of slots 142.

When a plurality of slots are formed on an inner surface of the flux ring 140, the metal particles may be aligned along a direction to disturb the movement of the MR fluid at a portion near to the upper and lower through holes 122 and 132 of the upper and lower plates 120 and 130. As a result, reduction in damping force may be restricted. When each slot is enlarged to further reduce the damping force, the damping force is not controlled.

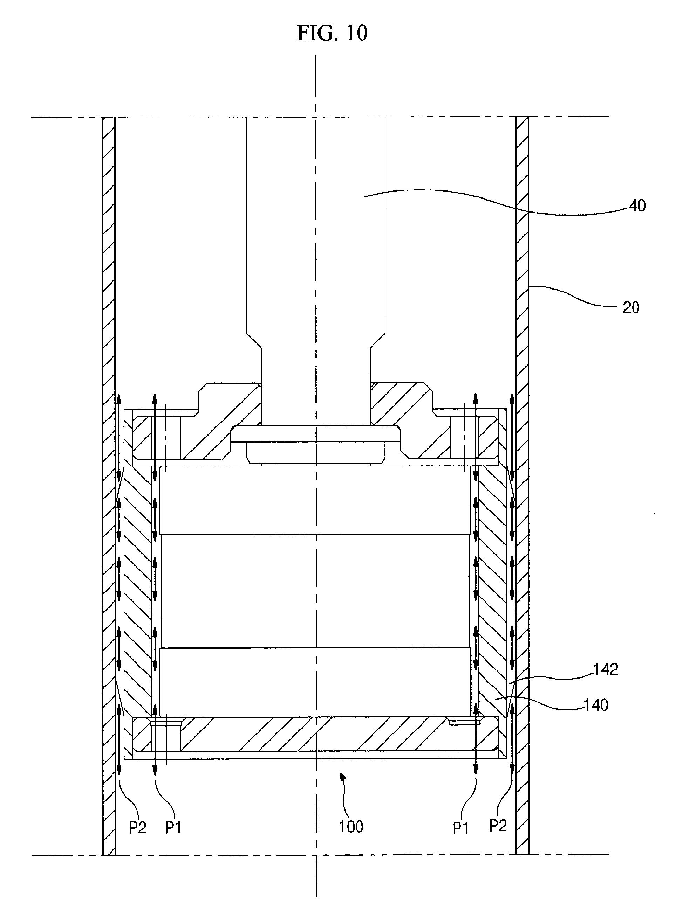

FIG. 10 is a cross-sectional view showing movement of an MR fluid in a cylinder of a damper according to an embodiment of the present invention.

In FIG. 10, the MR fluid flows through the first path P1 inside the flux ring 140 and through the second path P2 outside the flux ring 140. The MR fluid flows through the second path P2 of the plurality of slots 142 even when the movement of the MR fluid through the first path P1 is restricted by applying a current to the solenoid coil. As a result, the damping force is reduced.

Although not shown in FIGs. 7 to 10, a damper using a magneto-rheological (MR) fluid may include a cylinder, a piston rod which is inserted through an upper portion of the cylinder, the piston valve assembly 100 which is connected to a lower end portion of the piston rod so as to reciprocate in the cylinder. An inner space of the cylinder is divided into an upper rebound room (a first region) and a lower compression room (a second region) by the piston valve assembly 100. The rebound and compression rooms are filled with the MR fluid and are connected to each other through the first and second paths P1 and P2. In addition, the upper through holes 122 of the upper plate 120 are coupled with the rebound room and the lower through holes 132 of the lower plate 130 are coupled with the compressive room.

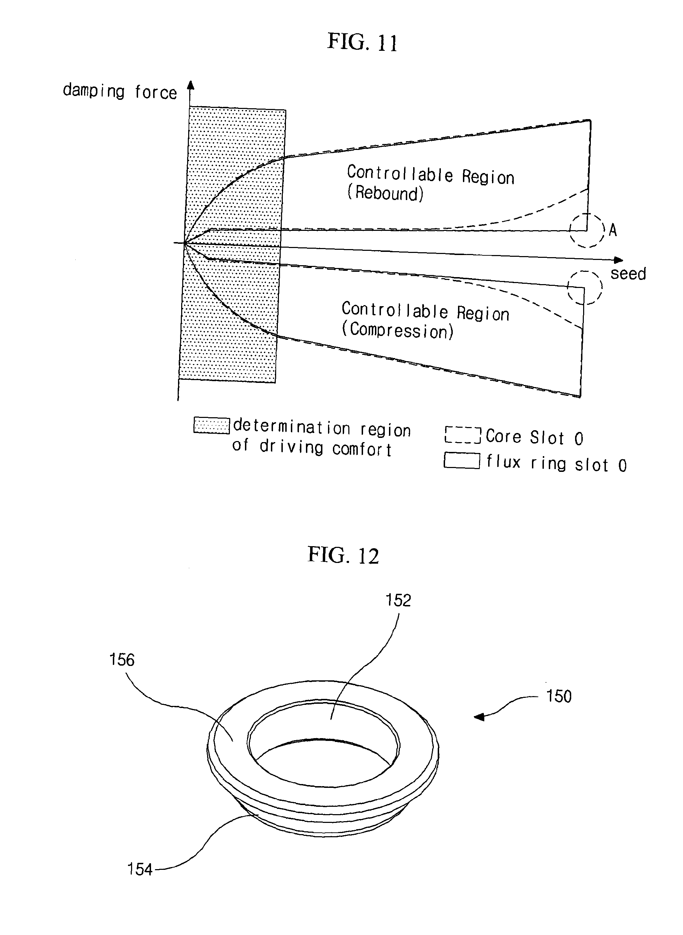

FIG. 11 is a graph showing characteristics of a damping force of a damper with a plurality of slots on a flux ring according to an embodiment of the present invention. For comparison, characteristics of a damping force of a damper with a plurality of slots on a core according to the related art are shown in FIG. 11.

In FIG. 11, the damping force and the increase rate of the damping force of the damper with a plurality of slots on a flux ring are reduced in a relatively low speed section as compared with those of the damper with a plurality of slots on the core. In addition, as shown in a portion A of FIG. 11, the controllable region of the damper with a plurality of slots on a flux ring is enlarged in the high speed section as compared with that of the damper with a plurality of slots on the core. Accordingly, the driving comfort is improved in the relatively low speed section and the damping force is precisely controlled in the relatively high speed section under various circumstances.

In the embodiment of FIGs. 7 and 8, a plurality of slots are formed on an outer surface of the flux ring 140 of the piston valve assembly 100 to obtain the second path in an exterior of the piston valve assembly 100, where the magnetic field less influences, and enlarge the total cross-sectional area of the paths for the MR fluid, thereby reducing the damping force in the relatively low speed section and enlarging the controllable region in the relatively high speed section. In another embodiment, a plurality of slots may be formed on an inner surface of the cylinder. The damper including the plurality of slots on the inner surface of the cylinder has the same characteristics as the damper including the plurality of slots on the outer surface of the flux ring.

Referring again to FIGs. 7 and 8, the stopper 150 is used for stably coupling the piston rod 40 and the core assembly 110. The stopper 150 is disposed between the upper plate 120 and the core assembly 110 and a lower portion of the stopper 150 is inserted into a connecting groove 42 at an outer surface of the piston rod 40.

FIG. 12 is a perspective view showing a stopper of a damper according to an embodiment of the present invention.

In FIG. 12, the stopper 150 includes a body portion 154 having an opening 152 and a supporting portion 156 outwardly protruding from the body portion 154. The piston rod 40 is inserted through the opening 152. The supporting portion 156 has an external diameter greater than the body portion 154 and has a flat top surface. The contact area between the stopper 150 and the upper plate 120 in the embodiment of the present invention is increased as compared with the contact area between the key 37 and the upper plate 32 in the related art. As a result, the pressure to the upper plate 120 due to upward movement of the piston rod 40 is efficiently dispersed and the stability in coupling of the piston rod 40 and the piston valve assembly 100 is improved.

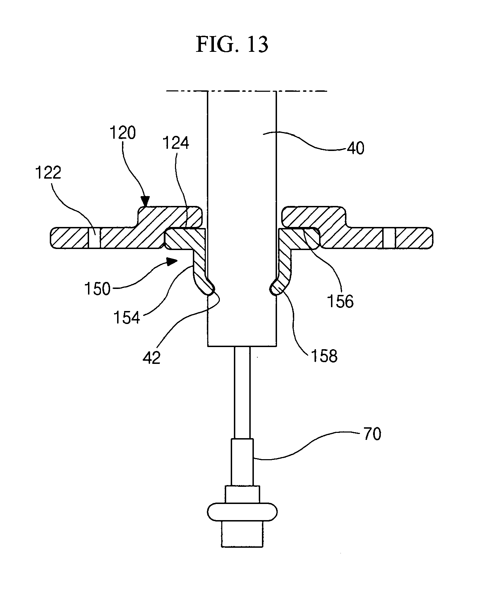

FIG. 13 is a cross-sectional view showing a piston valve assembly of a damper according to an embodiment of the present invention.

In FIG. 13, the upper plate 120 includes a concave portion 124 on a bottom surface thereof, and the concave portion 124 has a flat bottom surface. When the piston valve assembly 100 is combined with the piston rod 40, the supporting portion 156 of the stopper 150 is inserted into the concave portion 124 of the upper plate 120 such that the flat top surface of the supporting portion 156 areally contacts the flat bottom surface of the concave portion 124. As a result, strength and stability in coupling are improved. In another embodiment, the upper plate may have a flat bottom surface contacting the flat upper surface of the supporting portion of the stopper.

The stopper 150 is fixed to the piston rod 40. For example, a lower end portion of the body portion 154 of the stopper 150 may be plastically deformed to be inserted into and fixed to the connecting groove 42 of the piston rod 40.

Consequently, in a piston valve assembly and a continuous damping control damper according to an embodiment of the present invention, a damping force is precisely controlled. In addition, a driving comfort is improved in a relatively low speed section due to reduction in damping force and a controllable region is enlarged in a relatively high speed section sot that a damping force can be precisely controlled. Furthermore, a damping force is stably controlled by improving reliability in coupling of a piston rod and a piston valve assembly.

Thus, it is intended that the present invention cover the modifications and variations of this invention provided they come within the scope of the appended claims.

## Claims

1. A piston valve assembly (100) for a damper (10), comprising:
a core assembly (110) including a solenoid coil;
an upper plate (120) on the core assembly (110), the upper plate (120) including a first through hole;
a lower plate (130) under the core assembly (110), the lower plate (130) including a second through hole; and
a flux ring (140) surrounding the core assembly (110), the upper plate (120) and the lower plate (130), the flux ring (140) including a plurality of slots (142) on an outer surface thereof,
**characterized in that**
the plurality of slots (142) are parallel to a movement direction of the piston valve assembly (100).

2. The piston valve assembly (100) according to claim 1, wherein the plurality of slots (142) are symmetrically disposed with respect to a center of the flux ring (140).

3. The piston valve assembly (100) according to claim 1, wherein the piston valve assembly (100) is combined with a piston rod (40) of the damper (10).

4. The piston valve assembly (100) according to claim 3, further comprising a stopper (150) between the upper plate (120) and the core assembly (110),
wherein the stopper (150) comprises:
a body portion (154) including an opening (152) and fixed to the piston rod (40); and
a supporting portion (156) outwardly protruding from the body portion (154) and having an external diameter greater than the body portion (154).

5. The piston valve assembly (100) according to claim 4, wherein the supporting portion (156) has a flat top surface and the upper plate (120) has a flat bottom surface, and wherein the flat top surface of the supporting portion (156) of the stopper (150) areally contacts the flat bottom surface of the upper plate (120).

6. A damper (10) comprising:
a cylinder (20);
a piston rod (40) inserted into the cylinder (20);
a piston valve assembly (100) connected to the piston rod (40), the piston valve assembly (100) dividing an inner space of the cylinder (20) into first and second regions;
a first path P1 inside the piston valve assembly (100),
the first path P1 connecting the first and second regions; and
a second path P2 between an outer surface of the piston valve assembly (100) and an inner surface of the cylinder (20), the second path P2 connecting the first and second regions.

7. The damper (10) according to claim 6, wherein the second path P2 is formed by a plurality of slots (142) on one of the outer surface of the piston valve assembly (100) and the inner surface of the cylinder (20).

8. The damper (10) according to claim 7, wherein the plurality of slots (142) are parallel to a movement direction of the piston valve assembly (100).

9. The damper (10) according to claim 6, wherein the piston valve assembly (100) comprises:
a core assembly (110) including a solenoid coil;
an upper plate (120) on the core assembly (110), the upper plate (120) including a first through hole coupled with the first region;
a lower plate (130) under the core assembly (110), the lower plate (130) including a second through hole coupled with the second region; and
a flux ring (140) surrounding the core assembly (110), the upper plate (120) and the lower plate (130).

10. The damper (10) according to claim 9, further comprising a stopper (150) between the upper plate (120) and the core assembly (110),
wherein the stopper (150) comprises:
a body portion (154) including an opening (152) and fixed to the piston rod (40); and
a supporting portion (156) outwardly protruding from the body portion (154) and having an external diameter greater than the body portion (154).

11. The damper (10) according to claim 10, wherein the supporting portion (156) has a flat top surface and the upper plate (120) has a concave portion (124) having a flat bottom surface, and wherein the flat top surface of the supporting portion (156) of the stopper (150) areally contacts the flat bottom surface of the concave portion (124) of the upper plate (120).

12. The damper (10) according to claim 6, wherein the first and second regions area filled with a magneto-rheological fluid.

## Patentansprüche

1. Kolbenventilanordnung (100) für einen Dämpfer (10), umfassend:
eine Kernanordnung (110) mit einer Solenoidspule;
eine obere Platte (120) auf der Kernanordnung (110), wobei die obere Platte (120) eine erste Durchbrechung aufweist;
eine untere Platte (130) unter der Kernanordnung (110), wobei die untere Platte (130) eine zweite Durchbrechung aufweist; und
einen Fluxring (140), der die Kernanordnung (110), die obere Platte (120) und die untere Platte (130) umgibt, wobei der Fluxring (140) mehrere Schlitze (142) an einer äußeren Oberfläche hiervon aufweist,
**dadurch gekennzeichnet, dass**
die mehreren Schlitze (142) parallel zu einer Bewegungsrichtung der Kolbenventilanordnung (100) verlaufen.

2. Kolbenventilanordnung (100) nach Anspruch 1, wobei die mehreren Schlitze (142) symmetrisch angeordnet sind bezüglich eines Zentrums des Fluxrings (140).

3. Kolbenventilanordnung (100) nach Anspruch 1, wobei die Kolbenventilanordnung (100) kombiniert ist mit einer Kolbenstange (40) des Dämpfers (10).

4. Kolbenventilanordnung (100) nach Anspruch 3, weiter umfassend einen Stopper (150) zwischen der oberen Platte (120) und der Kernanordnung (110),
wobei der Stopper (150) umfasst:
einen Gehäuseteil (154) mit einer Öffnung (152) und an der Kolbenstange (40) befestigt, und
einen Stützteil (156), der von dem Gehäuseteil (154) nach außen vorsteht und einen äußeren Durchmesser aufweist, der größer ist als der Gehäuseteil (154).

5. Kolbenventilanordnung (100) nach Anspruch 4, wobei der Stützteil (156) eine flache obere Oberfläche aufweist und die obere Platte (120) eine flache untere Oberfläche aufweist und wobei die flache obere Oberfläche des Stützteils (156) des Stoppers (150) die flache untere Oberfläche der oberen Platte (120) flächig berührt.

6. Dämpfer (10) umfassend:
einen Zylinder (20);
eine Kolbenstange (40), die in den Zylinder (20) eingeführt ist;
eine Kolbenventilanordnung (100), die mit der Kolbenstange (40) verbunden ist, wobei die Kolbenventilanordnung (100) einen Innenraum des Zylinders (20) in einen ersten und einen zweiten Bereich unterteilt;
einen ersten Weg P1 innerhalb der Kolbenventilanordnung (100), wobei der erste Weg P1 den ersten und zweiten Bereich verbindet, und
einen zweiten Weg P2 zwischen einer äußeren Oberfläche der Kolbenventilanordnung (100) und einer inneren Oberfläche des Zylinders (20), wobei der zweite Weg P2 den ersten und zweiten Bereich verbindet.

7. Dämpfer (10) nach Anspruch 6, wobei der zweite Weg P2 gebildet ist durch mehrere Schlitze (142) auf einer der äußeren Oberflächen der Kolbenventilanordnung (100) und der inneren Oberfläche des Zylinders (20).

8. Dämpfer (10) nach Anspruch 7, wobei die mehreren Schlitze (142) parallel zu einer Bewegungsrichtung der Kolbenventilanordnung (100) verlaufen.

9. Dämpfer (10) nach Anspruch 6, wobei die Kolbenventilanordnung (100) umfasst:
eine Kernanordnung (110) mit einer Solenoidspule;
eine obere Platte (120) auf der Kernanordnung (110), wobei die obere Platte (120) eine erste Durchbrechung aufweist, die mit dem ersten Bereich verbunden ist,
eine untere Platte (130) unter der Kernanordnung (110), wobei die untere Platte (130) eine zweite Durchbrechung aufweist, die mit dem zweiten Bereich verbunden ist, und
einen Fluxring (140), der die Kernanordnung (110), die obere Platte (120) und die untere Platte (130) umgibt.

10. Dämpfer (10) nach Anspruch 9, weiter umfassend einen Stopper (150) zwischen der oberen Platte (120) und der Kernanordnung (110),
wobei der Stopper (150) umfasst:
einen Gehäuseabschnitt (154), der eine Öffnung (152) aufweist und an der Kolbenstange (40) befestigt ist; und einen Stützabschnitt (156), der von dem Gehäuseabschnitt (154) nach außen vorsteht und einen äußeren Durchmesser aufweist, der größer ist als der Gehäuseabschnitt (154).

11. Dämpfer (10) nach Anspruch 10, wobei der Stützabschnitt (156) eine flache obere Oberfläche aufweist und die obere Platte (120) einen konkaven Abschnitt (124) mit einer flachen unteren Oberfläche aufweist, wobei die flache obere Oberfläche des Stützabschnitts (156) des Stoppers (150) die flache untere Oberfläche des konkaven Abschnitts (124) der oberen Platte (120) flächig berührt.

12. Dämpfer (10) nach Anspruch 6, wobei der erste und der zweite Bereich mit einem magneto-rheologischen Fluid gefüllt sind.

## Revendications

1. Assemblage de vanne à piston (100) pour un amortisseur (10), comprenant:
- un assemblage de coeur (110) incluant une bobine de solénoïde;
- une plaque supérieure (120) sur l'assemblage de coeur (110), la plaque supérieure (120) présentant un premier trou débouchant;
- une plaque inférieure (130) sous l'assemblage de coeur (110), la plaque inférieure (130) présentant un second trou débouchant; et
- une bague magnétique (140) entourant l'assemblage de coeur (110), la plaque supérieure (120) et la plaque inférieure (130), la bague magnétique (140) présentant une pluralité de fentes (142) sur la surface extérieure de celle-ci,
**caractérisé en ce que**
la pluralité de fentes (142) est parallèle au sens de la direction du mouvement de l'assemblage de vanne à piston (100) .

2. Assemblage de vanne à piston (100) selon la revendication 1, dans lequel la pluralité de fentes (142) sont disposées de façon symétrique par rapport au centre de la bague magnétique (140).

3. Assemblage de vanne à piston (100) selon la revendication 1, dans lequel l'assemblage de vanne à piston (100) est combiné à une tige de piston (40) de l'amortisseur (10).

4. Assemblage de vanne à piston (100) selon la revendication 3, comprenant en outre une butée (150) entre la plaque supérieure (120) et l'assemblage de coeur (110),
dans lequel la butée (150) comprend
une partie formant corps (154) présentant une ouverture (152) et fixée à la tige de piston (40); et
une partie portante (156) faisant saillie, vers l'extérieur, de la partie formant corps (154) et dotée d'un diamètre externe supérieur à la partie formant corps (154).

5. Assemblage de vanne à piston (100) selon la revendication 4, dans lequel la partie portante (156) possède une surface supérieure plate et la plaque supérieure (120) possède une surface inférieure plate, et dans lequel la surface supérieure plate de la partie portante (156) de la butée (150) partage une surface de contact avec la surface inférieure plate de la plaque supérieure (120).

6. Amortisseur (10) comprenant:
- un cylindre (20);
- une tige de piston (40) insérée dans le cylindre (20) ;
- un assemblage de vanne à piston (100) relié à la tige de piston (40), l'assemblage de vanne à piston (100) séparant un espace intérieur du cylindre (20) en des première et seconde zones;
- un premier passage P1 à l'intérieur de l'assemblage de vanne à piston (100), le premier passage P1 reliant les première et seconde zones; et
- un second passage P2 entre une surface extérieure de l'assemblage de vanne à piston (100) et une surface intérieure du cylindre (20), le second passage P2 reliant les première et seconde zones.

7. Amortisseur (10) selon la revendication 6, dans lequel le second passage P2 est formé par une pluralité de fentes (142) sur l'une ou l'autre de la surface extérieure de l'assemblage de vanne à piston (100) et de la surface intérieure du cylindre (20).

8. Amortisseur (10) selon la revendication 7, dans lequel la pluralité de fentes (142) est parallèle au sens de la direction du mouvement de l'assemblage de vanne à piston (100).

9. Amortisseur (10) selon la revendication 6, dans lequel l'assemblage de vanne à piston (100) comprend:
- un assemblage de coeur (110) incluant une bobine de solénoïde;
- une plaque supérieure (120) sur l'assemblage de coeur (110), la plaque supérieure (120) présentant un premier trou débouchant accouplé à la première zone;
- une plaque inférieure (130) sous l'assemblage de coeur (110), la plaque inférieure (130) présentant un second trou débouchant accouplé à la seconde zone; et
- une bague magnétique (140) entourant l'assemblage de coeur (110), la plaque supérieure (120) et la plaque inférieure (130).

10. Amortisseur (10) selon la revendication 9, comprenant en outre une butée (150) entre la plaque supérieure (120) et l'assemblage de coeur (110),
dans lequel la butée (150) comprend:
une partie formant corps (154) présentant une ouverture (152) et fixée à la tige de piston (40); et
une partie portante (156) faisant saillie, vers l'extérieur, de la partie formant corps (154) et dotée d'un diamètre externe supérieur à la partie formant corps (154).

11. Amortisseur (10) selon la revendication 10, dans lequel la partie portante (156) possède une surface supérieure plate et la plaque supérieure (120) possède une partie concave (124) présentant une surface inférieure plate, et dans lequel la surface supérieure plate de la partie portante (156) de la butée (150) partage une surface de contact avec la surface inférieure plate de la partie concave (124) de la plaque supérieure (120).

12. Amortisseur (10) selon la revendication 6, dans lequel les première et seconde zones sont remplies par un fluide magnéto-rhéologique.
